# EUROPÄISCHE PATENTANMELDUNG

(11) **EP 3 620 475 A1**
(43) Veröffentlichungstag der Anmeldung: **11.03.2020**
(21) Anmeldenummer: 18192854.0
(22) Anmeldetag: 06.09.2018
(51) Int. Cl.: C08F 210/08, C09J 123/30, C09J 123/20, C08L 23/20, C08L 23/30, C08F 8/06

(54) **AMORPHE POLY-ALPHA-OLEFINE UND DEREN VERWENDUNG IN HOT MELT ZUSAMMENSETZUNGEN MIT VERBESSERTER VERSPRÜHBARKEIT**

(71) Anmelder: Evonik Operations GmbH, 45128 Essen (DE)
(72) Erfinder: BABIK, Sebastian, 40468 Düsseldorf (DE); CEPA, Steffen, 45768 Marl (DE); EBBERS, André, 44791 Bochum (DE); BEHRENDT, Klaus, 45721 Haltern am See (DE); BAUTZ, Jessica, 48308 Senden (DE); RAWERT, Katharina, 47441 Moers (DE); KAVACIC, Gabriele, 46284 Dorsten (DE)
(74) Vertreter: Evonik Patent Association

(57) **Zusammenfassung**

Die vorliegende Erfindung betrifft amorphe Poly-Alpha-Olefine, welche dadurch gekennzeichnet sind, dass sie eine Viskosität bei 190°C von kleiner 5000 mPas, eine Molgewichtsverteilung (Mw/Mn) von 3 bis 8, einen Quotient Mz/Mw von kleiner-gleich 3,0 und einen Quotient Mz/Mn kleiner 21,0 aufweisen, ein Verfahren zur Herstellung degradierter amorpher Poly-Alpha-Olefine, insbesondere der erfindungsgemäßen amorphen Poly-Alpha-Olefine, und die Verwendung der erfindungsgemäßen oder erfindungsgemäß hergestellten amorphen Poly-Alpha-Olefine in Schmelzkleber-zusammensetzungen.

## Beschreibung

Die vorliegende Erfindung betrifft amorphe Poly-Alpha-Olefine, die eine Viskosität bei 190°C von kleiner 5000 mPa*s, eine Molgewichtsverteilung (Mw/Mn) von 3 bis 8, einen Quotienten Mz/Mw von kleiner-gleich 3,0 und einen Quotienten Mz/Mn kleiner 21,0 aufweisen, ein Verfahren zur Herstellung degradierter amorpher Poly-Alpha-Olefine, insbesondere der erfindungsgemäßen amorphen Poly-Alpha-Olefine, und die Verwendung der erfindungsgemäßen oder erfindungsgemäß hergestellten, amorphen Poly-Alpha-Olefine in Schmelzkleberzusammensetzungen.

In der Applikation von Schmelzklebern (Hot Melts) werden vielfach Sprühdüsen (Spiraldüse, Signature-Düse, etc.) eingesetzt, bei denen die Hot Melt Formulierung als Schmelze durch Düsen unter Druck auf das Substrat aufgesprüht wird.

Das Problem bei Formulierungen die amorphe Poly Alpha Olefine (nachfolgend APAO) enthalten, besteht im Wesentlichen in der gegenüber SBS/SIS [Styrol-Butadien-Styrol Block-Co-polymere, bzw. Styrol-Isopren-Styrol-Block-Co-polymere] basierten Formulierungen deutlich höheren Applikationstemperatur und geringeren Güte des Versprühbildes. Konkret werden SBS/SISbasierte Systeme bei ca. 120°C appliziert und liefern ein sehr einheitliches Sprühbild. Nachteil dieses Systems ist der hohe Formulierungsgrad mit Harzsystemen (oft mehr als 40 Gew.-%) und die Geruchsbelastung durch die Styrol-basierten Rohstoffe. Dort greift der Vorteil der APAO-basierten Systeme, die weniger stark formuliert werden müssen (<30 Gew.-% Harze) und dazu auch eine geringere Geruchsbelastung aufweisen.

Gravierender Nachteil ist allerdings die deutlich höhere Applikationstemperatur von >140°C gegenüber den SBS/SIS-Systemen. So beschreibt EP 1442089 B1 die Applikation von APAO und syndiotaktischem PP mit Spiraldüsen bei >170°C.
US 8921474 B2 beschreibt zum Beispiel die generell schlechte Sprühbarkeit von APAO-basierten Hot Melts, weshalb SBS- bzw. Rubber-basierte Systeme eingesetzt werden.
EP 0442045 B1 beschreibt den Einsatz von Hot Melt Formulierungen bei < 200°C.
EP 1124911 B1 beschreibt versprühbare APAO-Systeme bei bevorzugt 140-160°C,
setzt aber 5 bis 30% Öl zu. US 20160222258 A1 schlägt ein mit SBS formuliertes APAO-System vor, um die Verarbeitungstemperatur zu senken.

Von Anwendungsseite werden als Anforderungen immer wieder Applikationstemperaturen von < 130°C beim Einsatz von "Signature-Düsen" gefordert. Diese konnten für APAO-Systeme bisher nicht erreicht werden.

Aufgabe der vorliegenden Erfindung war deshalb die Bereitstellung von APAO(s) oder einer Schmelzkleberzusammensetzung auf Basis von APAO(s), die einen oder mehrere der Nachteile des Standes der Technik nicht aufweisen.

Überraschenderweise wurde gefunden, dass amorphe Poly-Alpha-Olefine, die bestimmten Parametern genügen, eine oder mehrere der genannten Aufgaben lösen können.

Gegenstand der vorliegenden Erfindung sind deshalb amorphe Poly-Alpha-Olefine wie in den Ansprüchen beansprucht und nachfolgend beschrieben, die sich dadurch auszeichnen, dass sie eine Viskosität bei 190°C von kleiner 5000 mPas, eine Molgewichtsverteilung (Mw/Mn) von 3 bis 8, einen Quotient aus Mz/Mw von kleiner-gleich 3,0 und einen Quotient aus Mz/Mn kleiner 21,0 aufweisen.

Ebenfalls Gegenstand der vorliegenden Erfindung ist ein Verfahren zur Herstellung eines degradierten amorphen Poly-Alpha-Olefins, welches dadurch gekennzeichnet ist, dass das amorphe Poly-Alpha-Olefin durch radikalische, vorzugsweise peroxidische Degradierung eines amorphen Poly-Alpha-Olefins erhalten wurde, welches eine Viskosität bei 190°C von größer-gleich 5000 mPas aufweist. Verfahren zur Degradierung von Polymeren sind grundsätzlich bekannt. US 4,707,524 A beschreibt z.B. die Degradierung von Polypropylen durch Mischen mit einem Peroxid. US 3,121,070 A beschreibt die Degradierung von Polypropylen bei Temperaturen von 275 bis 450°C. US 3,940,379 A beschreibt die Degradierung von Polypropylen in Gegenwart von Sauerstoff oder Peroxiden unter Erhalt eines Polypropylens mit höherer Schmelzflussrate. Markus Gahleitner gibt in Prog. Polym. Sci. 26 (2001) 895 - 944 einen Überblick über die Schmelzrheologie von Polyolefinen.

Außerdem ist Gegenstand der vorliegenden Erfindung die Verwendung von erfindungsgemäßen APAOs oder erfindungsgemäß hergestellten APAOs in Schmelzkleberzusammensetzungen.

Durch die Verwendung der erfindungsgemäßen APAOs in Schmelzkleber-zusammensetzungen kann die Sprühtemperatur auf 100°C bis 140°C reduziert werden.
Das Material neigt deshalb weniger zum Vercracken (zur Zersetzung bzw. Spaltung der Polymeren).

Das erfindungsgemäße APAO kann, bei 120°C in einer identischen Formulierung (ohne SBS/SIS oder gar Öl) wie zuvor eingesetzt werden und erlaubt - wie zuvor nicht möglich - eine niedrige Anwendungstemperatur mit geringerer Harzformulierung und geringerer Geruchsbelästigung bei einem gleichzeitig hervorragendem Sprühbild.

Auf Grund der geringeren Sprühtemperatur muss weniger Energie zum Aufschmelzen der Schmelzkleberzusammensetzung eingesetzt werden. Zudem wird das Substrat durch die niedrigere Temperatur weniger belastet bzw. es kann Substratmaterial eingesetzt werden, welches thermisch weniger stabil ist.

Das Sprühbild der erfindungsgemäß verwendeten Schmelzkleberzusammensetzung ist deutlich einheitlicher, was mit einem gleichmäßigeren Auftrag des Materials einhergeht. Dies führt zu deutlich besseren "Peel-Werten", wie schwer also die Non-Wowen Substrate zu trennen sind. Dabei wurden Werte von mehr als 2,2 N auf einem 25 mm Streifen erzielt, wo zuvor die Werte bei unter 2,0 N lagen (jeweils bestimmt gemäß ASTM D1876).

Ein weiterer Vorteil ist die höhere Prozessstabilität. Durch die Vermeidung von sog. Engelshaar - ungerichtet aus der Düse austretenden Hotmelt-Fäden - verlängern sich die Reinigungszyklen und reduziert sich der Reinigungsaufwand, was letztendlich zu mehr Betriebsstunden führt.

Die auf den erfindungsgemäßen APAOs basierenden Schmelzkleberzusammensetzungen können nicht nur in Sprühdüsenverfahren eingesetzt werden, sondern auch anderen Verfahren, z.B. solchen, bei denen Schlitzdüsen [slot dies] eingesetzt werden.

Die Schmelzkleberzusammensetzungen basierend auf erfindungsgemäßem bzw. erfindungsgemäß hergestelltem APAO können im Vergleich zu Formulierungen auf Metallocen-basierten Systemen deutlich polymerreicher formuliert werden, was den Formulierungsaufwand deutlich reduziert. So kann auf Basis von erfindungsgemäßem bzw. erfindungsgemäß hergestelltem APAO mit bis zu 70 Gew.-% Polymer (APAO) oder sogar bis über 95 Gew.-%, bezogen auf die Schmelzkleberzusammensetzung formulieren werden,
wo hingegen in Metallocen-basierten Systemen oftmals nur max. 40 Gew.-% Polymer (Polyolefin) bezogen auf die Gesamtformulierung eingesetzt werden können.

Die erfindungsgemäßen APAOs, das erfindungsgemäße Verfahren und die erfindungsgemäße Verwendung der APAOs werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in
Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25°C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Das erfindungsgemäße amorphe Poly-Alpha-Olefin, zeichnet sich dadurch aus, dass es eine Viskosität bei 190°C von kleiner 5000 mPas, vorzugsweise von 1000 bis 4000 mPas, eine Molgewichtsverteilung (Mw/Mn) von 3 bis 8, bevorzugt von 4 bis 7, einen Quotient aus Mz/Mw von kleiner 3,5, vorzugsweise 1,1 bis 2,9, und einen Quotient aus Mz/Mn kleiner 21,0, vorzugsweise 1,1 bis 19,9, aufweist.

Mw steht dabei für das gewichtsmittlere Molekulargewicht, Mn für das zahlenmittlere Molekulargewicht und Mz für das Zentrifugenmittel des Molekulargewichts. Die Bestimmung der Molekulargewichte Mw, Mn, und Mz erfolgt mittels HT-GPC [Hochtemperatur-GelpermeationsChromatographie] wie in DIN 55 672 beschrieben. Konkret wird die analytische HT-GPC wurde mittels eines PL220-Ofens (Agilent, Waldbronn) mit dazugehöriger isokratischer Pumpe bei 150°C durchgeführt. Als mobile Phase wurde 1,2,4-Trichlorbenzol (TCB) (Merck, Darmstadt) versetzt mit ∼1 g/L Butylhydroxytoluol (BHT) mit einer Flussrate von 1 mL/min und als stationäre Phase eine Agilent PLgel Olexis Guard (50 x 7.5 mm, Vorsäule) sowie drei Agilent PLgel Olexis (300 x 7.5 mm) verwendet.
Die Detektion erfolgte mittels eines IR Detektors (Model IR4, PolymerChar, Valencia, Spanien). Ausgewertet wurden die Datensätze mittels einer Polystyrol-Kalibration (EasiCal PS-1, Agilent) durch die Software WinGPC (Polymer Standards Service, Mainz).

Die Bestimmung der Viskosität bei 190°C erfolgt durch Messungen mit einem RotationsViskosimeter analog DIN 53 019. Die Bestimmung der Viskosität bei 190°C erfolgt durch Messungen mit dem Kegel-Platte-Viskosimeter CAP 2000 + von der Firma Brookfield mit einer viskositätsabhängigen Scherrate analog der folgenden Tabelle:

| Kegel | Schergeschwindigkeit | Eta (bei 10 % Auslastung des Drehmoment) | Eta (bei 100 % Auslastung des Drehmoment) |
|---|---|---|---|
| 07 | 10 s-1 | 6.300 mPas | 63.000 mPas |
| 08 | 10 s-1 | 25.000 mPas | 250.000 mPas |
| 07 | 30 s-1 | 2.100 mPas | 21.000 mPas |

Zur Kalbrierung des Brookfield Viskosimeters wurde eine Newtonsche Normalprobe Typ 500000 BW eingesetzt. Diese wurde vom Zentrum für Messen und Kalibrieren & Analytik GMBH bezogen und mit einem dazugehörigen Kalibrierschein ausgestellt.

Das APAO ist vorzugsweise ein Propen- oder 1-Buten reiches APAO. Bevorzugtes Propen-reiches APAO basiert vorzugsweise zu > 50 Gew.-%, bevorzugt zu 51 bis
98 Gew.-% auf Propen als Monomer bezogen auf alle Monomere. Des Weiteren kann das Propen-reiche APAO 1-Buten und/oder Ethen, vorzugsweise 1-Buten und Ethen als Comonomere aufweisen. Dabei ist die Summe von 1-Buten und Ethen < 49 Gew.-% vorzugsweise mit einem Ethenanteil von 0 bis 25 Gew.-%, bevorzugt 1 bis 15 Gew.-% bezogen auf alle Monomere. Bevorzugtes 1-Buten-reiches APAO basiert vorzugsweise zu > 50 Gew.-%, bevorzugt zu 51 bis 98 Gew.-% auf 1-Buten als Monomer bezogen auf alle Monomere. Des Weiteren kann das 1-Buten-reiche APAO Propen und/oder Ethen, vorzugsweise Propen und Ethen als Comonomere aufweisen. Dabei ist die Summe von Propen und Ethen < 49 Gew.-% vorzugsweise mit einem Ethenanteil von
0 bis 25 Gew.-%, bevorzugt 1 bis 15 Gew.-% bezogen auf alle Monomere.

Das erfindungsgemäße amorphe Poly-Alpha-Olefin, kann vorteilhafterweise von
0,01 bis 3 Gew.-% mindestens eines Antioxidants aufweisen. Als Antioxidantien können jegliche als Antioxidantien und/oder Inhibitoren, also Substanzen, die den Fortgang einer radikalischen Reaktion stoppen, bekannten Substanzen eingesetzt werden. Vorzugsweise enthält das erfindungsgemäße amorphe Poly-Alpha-Olefin sterisch gehinderte Amine, z.B. Piperdin-Derivate, bevorzugt sterisch gehinderte Phenole, wie z.B. Irganox 1010, Naugard XL1, Songnox 1035. Auf diese Weise kann der Abbau des APAO und/oder ein vergilben des APAO vermieden oder vermindert werden.

Das erfindungsgemäße APAO weist vorzugsweise von 0,01 bis 3 Gew.-% mindestens eines Abbauproduktes eines Radikalbildners auf. Bevorzugt weist das erfindungsgemäße APAO Benzoesäure, Methanol, Butanol, tert.-Butanol, Propionsäure und/oder 2,5-Dimethylhexan-2,5-ol als Abbauproduktes eines Radikalbildners auf.

Die erfindungsgemäßen APAOs können mit dem nachfolgend beschriebenen erfindungsgemäßen Verfahren hergestellt werden.

Das erfindungsgemäße Verfahren zur Herstellung eines degradierten amorphen Poly-Alpha-Olefins, zeichnet sich dadurch aus, dass ein amorphes Poly-Alpha-Olefin, welches eine Viskosität bei 190 °C von größer-gleich 5.000 mPas, bevorzugt 6.000 bis100.000 mPas und besonders bevorzugt von 7.500 bis 75.000 mPas aufweist, einer radikalischen, vorzugsweise peroxidischen Degradierung unterzogen wird. Die radikalische, vorzugsweise peroxidische Degradierung wird vorzugsweise in einer Mischapparatur, bevorzugt in einem Extruder durchgeführt.

Das eingesetzte APAO ist vorzugsweise ein Propen- oder 1-Buten reiches APAO. Bevorzugtes Propen-reiches APAO basiert vorzugsweise zu > 50 Gew.-%, bevorzugt zu 51 bis 98 Gew.-% auf Propen als Monomer bezogen auf alle Monomere. Des Weiteren kann das Propen-reiche APAO 1-Buten und/oder Ethen, vorzugsweise 1-Buten und Ethen als Comonomere aufweisen. Dabei ist die Summe von 1-Buten und Ethen < 49 Gew.-% vorzugsweise mit einem Ethenanteil von 0 bis 25 Gew.-%, bevorzugt 1 bis 15 Gew.-% bezogen auf alle Monomere. Bevorzugtes 1-Buten-reiches APAO basiert vorzugsweise zu > 50 Gew.-%, bevorzugt zu 51 bis 98 Gew.-% auf 1-Buten als Monomer bezogen auf alle Monomere. Des Weiteren kann das 1-Buten-reiche APAO Propen und/oder Ethen, vorzugsweise Propen und Ethen als Comonomere aufweisen.

Dabei ist die Summe von Propen und Ethen < 49 Gew.-% vorzugsweise mit einem Ethenanteil von 0 bis 25 Gew.-%, bevorzugt 1 bis 15 Gew.-% bezogen auf alle Monomere.

Vorzugsweise wird die radikalische Degradierung in Gegenwart eines Radikalbildners, vorzugsweise ausgewählt aus Dibenzoylperoxid, tert.-Butylperoxyisopropylcarbonat, 2,5-Dimethyl-2,5-di(tert-butylperoxy)hexan, Di-tert.-Butylperoxid und/oder, bevorzugt oder, p-Methanhydroperoxid durchgeführt. Der Anteil der eingesetzten Radikalbildner beträgt vorzugsweise von 0,01 bis 10 Gew.-%, bevorzugt von 0,1 bis 5 Gew.-% bezogen auf die Summe von APAO und Radikalbildnern.

Die Reaktion der Degradierung wird in dem erfindungsgemäßen Verfahren vorzugsweise bei einer Temperatur von 100 bis 350°C, bevorzugt von 150 bis 250°C durchgeführt. Die Degradierung erfolgt vorzugsweise in der Schmelze.

Je nach Reaktivität und Konzentration des eingesetzten Radikalbildners wird die Reaktion der Degradierung vorzugsweise über einen Zeitraum von 15 Sekunden bis 1200 Sekunden, bevorzugt 30 Sekunden bis 600 Sekunden durchgeführt.

Bevorzugt wird die Reaktion der Degradierung über einen Zeitraum t von 15 Sekunden bis 1.200 Sekunden, bevorzugt 30 Sekunden bis 600 Sekunden und bei einer Temperatur T von 100 bis 350°C, bevorzugt von 150 bis 250°C durchgeführt, wobei der Anteil A der eingesetzten Radikalbildner von 0,01 bis 10 Gew.-%, bevorzugt 0,1 bis 5 Gew.-% bezogen auf die Summe von APAO und Radikalbildnern beträgt, mit der Maßgabe, dass das Produkt aus t x T x A von 500 bis 1.000.000 [sec °C Gew.-%], bevorzugt von 1.000 bis 100.000 [sec °C Gew.-%] beträgt.

Die Reaktion der Degradierung wird in dem erfindungsgemäßen Verfahren vorzugsweise in einer Mischapparatur durchgeführt. Las Mischapparaturen werden bevorzugt Extruder, Kneter oder Druckreaktoren mit Rührern eingesetzt. Besonders bevorzugt wird die Reaktion in einem Extruder durchgeführt. Besonders bevorzugt wird die Reaktion der Degradierung in einer Mischapparatur, bevorzugt einem Extruder unter Anwendung der oben vorzugsweise und insbesondere als bevorzugt genannten Zeiträume, Temperaturen und Anteilen an Radikalbildnern, durchgeführt.

Das erfindungsgemäße Verfahren ist insbesondere geeignet zur Herstellung der erfindungsgemäßen APAOs.

Das erfindungsgemäße bzw. erfindungsgemäß hergestellte APAO kann in jedweder Hot Melt Anwendung eingesetzt werden in der auch APAOs nach dem Stand der Technik eingesetzt werden können.

Insbesondere werden die erfindungsgemäßen APAOs oder erfindungsgemäß hergestellten APAOs in oder als Schmelzkleberzusammensetzungen verwendet. Vorzugsweise weisen diese Zusammensetzungen von 50 bis 100 Gew.-%, bevorzugt mindestens 70 Gew.-% und besonders bevorzugt mindestens 90 Gew.-% der erfindungsgemäßen APAOs oder erfindungsgemäß hergestellten APAOs auf. Weitere Bestandteile der Schmelzkleberzusammensetzung können insbesondere ein Tackifier Harz und/oder ein Wachs, insbesondere ein Fischer-Tropsch- oder Polyethylen-Wachs, aufweisen. Bevorzugte Schmelzkleberzusammensetzungen weisen von 50 bis 100 Gew.-% eines erfindungsgemäßen oder erfindungsgemäß hergestellten APAOs,
0 bis 40 Gew.-% eines Tackifier Harzes, z. B. hydriertes C5/C9 Escorez™ 5300, der Exxon Mobil Corporation und 0 bis 10 Gew.-% eines Fischer-Tropsch oder PE Wachses, wie z.B. Shell GTL Sarawax SX80.

Die Schmelzkleberzusammensetzung kann durch Auftrag mittels Sprühdüse, Schlitzdüse, Schmelzklebepistole oder Schmelzguss, bevorzugt mittels Sprühdüse appliziert werden. Besonders geeignete Beschichtungsanlagen mit Auftragseinheiten zum Versprühen des Klebstoffes sind z.B. solche der Firmen Nordson Corporation (nachfolgend Nordson) oder ITW Dynatec GmbH (nachfolgend ITW). Geeignete Düsen sind z.B. UNIVERSAL™ SIGNATURE™ Düsen oder Controlled Fiberization der Firma Nordson oder vergleichbare Düsen des Typs UFD™ der Firma ITW. Weitere mögliche Düsen sind in Tabelle A aufgelistet.

**Tabelle A: Liste mit Düsen der Firmen Nordson und IWT**

| **Düse** | **Firma** | **Produktions geschwindigkeit** | **Empfohlene Klebstoff viskosität (190°C)** |
|---|---|---|---|
| CF (Controlled Fiberization) | Nordson | 10-350m/min | 4000-8000 mPa*s |
| SUMMIT | Nordson | 10-400m/min | 1500-10000 mPa*s |
| Continuous Signature | Nordson | 10-650m/min | 1000-3000 mPa*s |
| Intermittent Signature | Nordson | 10-650m/min | 1000-6000 mPa*s |
| Control Coat | Nordson | 10-600m/min | 1000-3000 mPa*s |
| UFD RF | ITW | bis 500m/min | bis 6000 mPa*s |
| UFD Omega | ITW | bis 500m/min | bis 6000 mPa*s |
| UFD HS RF | ITW | bis 650m/min | 1000 bis 6000 mPa*s |
| UFD HS Omega | ITW | bis 650m/min | 1000 bis 6000 mPa*s |
| UFD SCS | ITW | bis 650m/min | 1000 bis15000 mPa*s |

Die Schmelzkleberzusammensetzung kann erfindungsgemäß in den Anwendungen Verpacken, bevorzugt Kartonagen oder Papier, Bauen, insbesondere Holzrahmenbauweise, Teppich, Holzbearbeitung, bevorzugt Profilversiegelung und Kantenumleimung, Automobil, bevorzugt Dachhimmel, Luftfilter oder Fahrzeuglampen, Matratzen, Bitumen, Hygieneartikel, bevorzugt Windeln oder Binden, verwendet werden.

Neben klassischen Hot Melt Anwendungen kann das erfindungsgemäße bzw. erfindungsgemäß hergestellte APAO auch als Additiv zu anderen unpolaren Kunststoffen, wie z.B. Polypropylenen, Polyethylenen und Polybutenen gegeben werden.

Diese können sich als Mischungsvermittler (Compatibilizer) oder auch als Träger-Matrix für Masterbatchanwendungen eignen, um z.B. Pigmente, andere Additive oder Fasern einzubinden.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Der Gegenstand der vorliegenden Erfindung wird an Hand der Figuren Fig. 1 bis Fig. 3 näher erläutert, ohne dass der Gegenstand der vorliegenden Erfindung darauf beschränkt sein soll.

In Fig. 1 ist schematisch eine Apparatur wiedergegeben, mit welcher die erfindungsgemäß eingesetzten degradierten APAOs hergestellt werden können. Die Apparatur weist mindestens eine Mischapparatur M, eine Zuführung für Radikalbildner R, eine Zuführung für zu degradierendes APAO A, optional eine Möglichkeit zum Anlegen eines Vakuums V. Als Produkt verlässt degradiertes APAO Ad die Mischapparatur M.

In Fig. 2a ist ein Beispiel für ein schönes Sprühmuster wiedergegeben. Es ist leicht erkennbar, dass das Muster regelmäßig ist und die Fäden keine Löcher oder Tropfen aufweisen.

In Fig. 2b ist ein Beispiel für ein schlechtes Sprühmuster wiedergegeben. Es ist leicht erkennbar, dass das Muster unregelmäßig ist und die Fäden Löcher und Tropfen aufweisen.

In Fig. 3a ist das Sprühen auf eine Walze abgebildet. Aus diesem Blickwinkel kann sehr gut die Ablenkung der Sprühfäden in bzw. gegen die Beschichtungsrichtung bestimmt werden.

In Fig. 3b ist schematisch das Aufsprühen des Klebstoffs aus Düse D auf ein Vlies V1 dargestellt. AR bezeichnet die Applikationsrichtung bzw. den Vorschub des Vlieses V1.
Auf den aufgebrachten Klebstoff wird ein weiteres Vlies V2 aufgebracht.

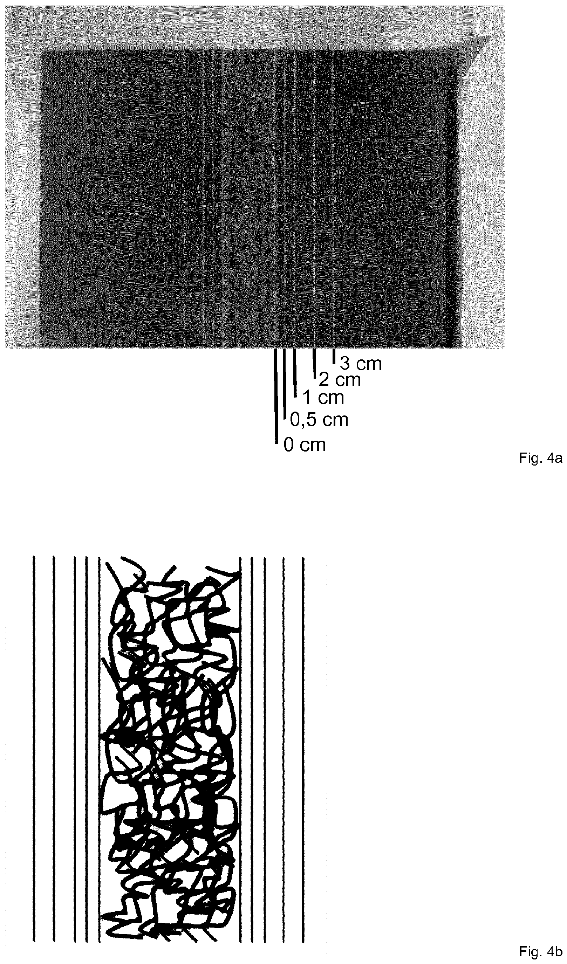

In Fig. 4a ist die Sprühschablone zur Quantifizierung der Ablenkung abgebildet, auf der eine Applizierung vorgenommen wurde. Die Schablone ist ein beschichtetes und gegenkaschiertes Substrat (Polypropylen/Polypropylen). Die Ablenkungen 0 cm, 0,5 cm, 1 cm, 2 cm und 3 cm entsprechen den Klassen 0, 0,5, 1, 2 und >2.

In Fig. 4b ist schematisch die Sprühschablone zur Quantifizierung der Ablenkung dargestellt.

Der Gegenstand der vorliegenden Erfindung wird in den nachfolgenden Beispielen näher erläutert, ohne dass der Gegenstand der vorliegenden Erfindung darauf beschränkt sein soll.

### Beispiele:

### Beispiel 1: Herstellung von degradiertem APAO in einem Reaktor mit Rührer

400g VESTOPLAST® 750, Evonik Resource Efficiency GmbH, werden in einen Labor-Druckreaktor mit Rührer gefüllt und auf 170°C aufgeheizt. Ist die Temperatur erreicht werden 4 Gew.-% (16 g) des Peroxids (Peroxan HX [2,5-Dimethyl-2,5-di-(tert-butylperoxy)-hexan] der Pergan GmbH) zugegeben und die Mischung 5 Minuten gerührt. Anschließend wird die Mischung ausgetragen und die Schmelzviskosität bei 190°C an einem Labor Viskosimeter von Brookfield bestimmt (Bestimmungsmethode siehe oben). Die Viskosität der ausgetragenen Mischung bei 190°C betrug 4.000 mPa*s. Eine Bestimmung der Viskosität bei 190°C des eingesetzten VESTOPLAST® 750 ergab einen Wert von ∼50.000 mPa*s.

In gleicher Weise wurden erste Versuche zur Degradierung mit einem niederviskosen Basispolymer B1, (VESTOPLAST® EP V2094, offspec, Viskosität bei 190°C = 7.700mPa*s) mit unterschiedlichen Mengen des Peroxids und bei verschiedenen Reaktionstemperaturen durchgeführt. Tabelle B gibt die verwendeten Versuchsparameter sowie die gemessenen Eigenschaften wieder. Zum Vergleich sind die Eigenschaften von nicht degradiertem VESTOPLAST® 408 (in der Tabelle als B2 bezeichnet) und VESTOPLAST® 750 (in der Tabelle als B3 bezeichnet).

**Tabelle B: in Beispiel 1 eingesetzte Produkte, Versuchsparameter und ermittelte Produkteigenschaften**

| Basispolymer | B1 | B1 | B1 | B1 | B1 | B2 | B3 |
|---|---|---|---|---|---|---|---|
| Viskosität [mPa*s] | 7700 | 5302 | 3636 | 4500 | 2761 | 8200 | 52500 |
| Peroxid [Gew.-%] | 0 | 0,5 | 1,5 | 0,5 | 1,5 | 0 | 0 |
| Temperatur [°C] | 0 | 130 | 130 | 170 | 170 | 0 | 0 |
| Mn | 12700 | 10950 | 11350 | 10480 | 8350 | 12000 | 17890 |
| Mw | 74950 | 75800 | 69900 | 65450 | 57250 | 82800 | 149810 |
| Mz | 275500 | 312500 | 249500 | 198000 | 151500 | 388000 | 564600 |
| Mw/Mn | 5,9 | 6,9 | 6,2 | 6,2 | 6,9 | 6,9 | 8,4 |
| Mz/Mw | 3,7 | 4,1 | 3,6 | 3,0 | 2,6 | 4,7 | 3,8 |
| Mz/Mn | 21,7 | 28,5 | 22,0 | 18,9 | 18,1 | 32,3 | 31,6 |

Wie der Tabelle B entnommen werden kann, sind durch Degradierung von amorphem Poly-Alpha-Olefin, welches eine Viskosität bei 190°C von größer-gleich 5000 mPa s aufweist, mittels radikalischer Degradierung APAOs mit den gewünschten Material-/Produkteigenschaften zugänglich.

### Beispiel 2: Herstellung von degradiertem APAO im Technikum in einem Extruder

20 kg VESTOPLAST® 750 wurden als Granulat vorgelegt und über eine Zuführung in einen Bersdorf DSK42 Extruder gefördert. Dabei werden 1,8 kg/h VESTOPLAST® 750 und ca. 200 g/h einer 50 Gew.-%igen Peroxan PK295V [1,1-Di-(tert-butylperoxy)-3,3,5-trimethylcyclohexan] der Pergan GmbH Mischung in Isododekan dosiert. Die Verweilzeit (Reaktionszeit) der Reaktionsmischung in dem Extruder beträgt 30 Sekunden und die Temperatur im Extruder beträgt 160°C. Die Viskosität der ausgetragenen Mischung bei 190°C betrug 2.800mPa*s.

### Beispiel 3: Herstellung von Schmelzkeberzusammensetzungen

Die in Beispiel 2 gewonnenen Polymeren, wurden zu einer Schmelzkleberzusammensetzung verarbeitet. Dazu wurden die in der nachfolgenden Tabelle C genannten Komponenten bei 190°C unter Rühren miteinander vermischt.

**Tabelle C: Eingesetzte Komponenten sowie in Klammern Massen% der eingesetzten Komponenten zur Herstellung der Schmelzkleberzusammensetzungen**

| Beispiel | APAO | Tackifier Harz | Wachs |
|---|---|---|---|
| 3a | Aus Beispiel 2 (65) | Escorez™ 5380 (30) | Sarawax SX80 (5) |
| 3b | Aus Beispiel 2 (100) | | |
| 3c | Aus Beispiel 2 (70) | Escorez™ 5300 (30) | |

### Beispiel 4: Überprüfung der Versprühbarkeit

Für die Überprüfung der Versprühbarkeit wurden Testreihen mit 14 Versuchen für jede Schmelzkleberformulierung bei drei zu untersuchenden Temperaturen (120°C, 140°C
und 160°C) durchgeführt. Dabei wurden Parameter wie Luftdruck an der Düse und Masse des aufgebrachten Schmelzklebers variiert, wobei das Anwendungsfenster der verwendeten Düse berücksichtigt wurde. Die Versuche wurden mit einer Versprühanlage Meltex Hot Melt Coater der Firma Nordson durchgeführt (Gerätebezeichnung: MX 3012-1/0220-2086). Als Düse wurde eine Low Flow Signature Nozzle von Nordson verwendet. Die zu vesprühende Hot Melt Formulierung wird im Tank bei 190°C aufgeschmolzen und mittels einer Pumpe zur Düse gefördert, wo über einen applizierten Luftstrom die Hot Melt Formulierung mittels eines beheizten Luftstroms am Düsenaustritt auf das unterhalb der Düse vorbeilaufende Non-Wowen Substrat abgelegt wird. Von jedem Versuch wurde eine Videoaufnahme von 10 Sekunden angefertigt. Die variierten Versuchsparameter sind Tabelle 1 zu entnehmen.
- Masse des aufgebrachten Schmelzklebers:: 0,5 bis 10 g/m² [in Abhängigkeit von Pumpendrehzahl und Bandgeschwindigkeit]
- Geschwindigkeit des Substrats:: 15 m/min
- Druck/Luftmenge an der Düse:: 10 bis 130 NL/min pro Düse bzw. 1 bis 4 bar

**Tabelle 1: Verwendete Versuchsparameter**

| **Parameter** | **Abkürzung** | **Einheit** | **Werte** | | | | | |
|---|---|---|---|---|---|---|---|---|
| Temperatur des Schmelzklebers | T_nozzle | °C | 120 | 140 | 160 | | | |
| Luftdruck an der Düse | P | bar | 1 | 2 | 2,5 | 3 | 3,5 | 4 |
| Pumpendrehzahl (Digitalanzeige) | rpm_pump | % | 13 | 26 | 35 | 73 | 93 | |
| Abstand der Düse vom Substrat | d | cm | 4 | | | | | |
| Düsentyp | Düse | - | low flow signature nozzle | | | | | |

### Beurteilung der Sprühmuster

Die Sprühmuster wurden an Hand der nachfolgend beschriebenen Kriterien beurteilt. Die Ergebnisse der Beurteilungen sind in den Tabellen 2a bis 2c angegeben.

### Visueller Eindruck des Sprühmusters:

Der visuelle Eindruck des Sprühmusters soll bewertet werden. Es handelt sich um eine subjektive Bewertung.

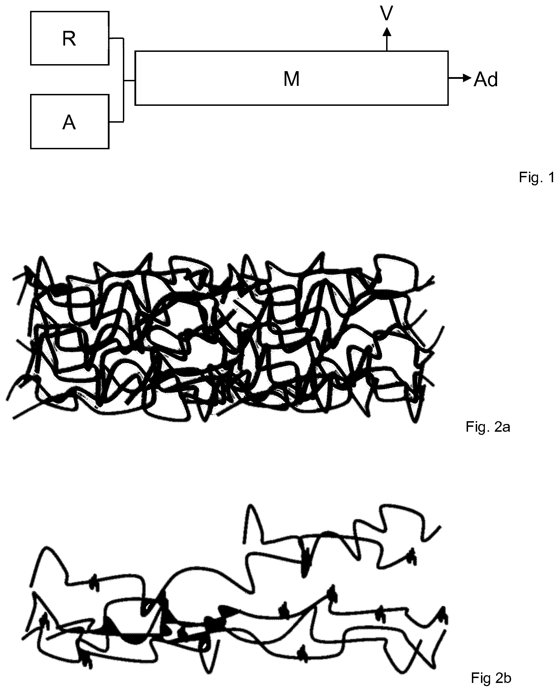

Bei einem guten Sprühmuster baut der Schmelzkleber feine Fäden auf, die exakt den Bereich unter der Düse abdecken. Es laufen keine Fäden nach links oder rechts und die Oberfläche ist mit einem regelmäßigen Muster bedeckt. In Fig. 2a ist ein Beispiel für ein schönes Sprühmuster wiedergegeben.

Bei einem schlechten Sprühmuster ist der Schmelzkleber in dicken Linien und oder Punkten auf das Substrat aufgebracht. Die Fäden sind breiter als die Düse und unregelmäßig. Es können große Löcher in dem Sprühmuster vorhanden sein und Teile des Substrats sind nicht mit Schmelzkleber bedeckt. In Fig. 2b ist ein Beispiel für ein schlechtes Sprühmuster wiedergegeben.

Bewertung:
0 = schönes Sprühmuster
1 = schlechtes Sprühmuster

### Kantenstabilität:

Kantenstabilität bezieht sich auf die Stabilität einer geraden Linie. Viele Löcher in der Linie ist ein Zeichen dafür, dass das Spraymuster keine gute Kantenstabilität aufweist. Einzelne Ausreißer bleiben unberücksichtigt.

Bewertung:
0 = Kantenstabilität
1 = keine Kantenstabilität

### Ablenkung der Fäden (von Vorlagenmaske):

Die Ablenkung bezieht sich auf die Gebiete des Sprühmusters, bei denen Fäden außerhalb der zentralen Markierung von 2,5 cm liegen (die Ablenkung wird nur bestimmt für die Fäden, die auf der dunklen Vorlagenmaske sichtbar sind)

Bewertung:
0 = keine Ablenkung
0,5 = Ablenkung von bis zu 0,5 cm Länge
1 = Ablenkung von bis zu 1 cm Länge
2 = Ablenkung von bis zu 2 cm Länge
3 = Ablenkung größer als 2 cm Länge

### Feine Fäden:

Die Ablenkung bezieht sich auf die Gebiete des Sprühmusters, bei denen sehr feine Fäden außerhalb der zentralen Markierung von 2,5 cm liegen (die feinen Fäden sind auf der dunklen Vorlagenmaske praktisch unsichtbar und können nur gesehen werden, wenn die Vorlagenmaske gegen das Licht gehalten wird.)

Bewertung:
0 = keine Ablenkung
0,5 = Ablenkung von bis zu 0,5 cm Länge
1 = Ablenkung von bis zu 1 cm Länge
2 = Ablenkung von bis zu 2 cm Länge
3 = Ablenkung größer als 2 cm Länge

### Auswertung der Sprühvideos:

### Auftrag direkt unter der Düse:

Der Schmelzkleberauftrag soll direkt unter der Düse erfolgen. Eine Abweichung nach links oder rechts ist unerwünscht. Zur Auswertung wird eine Vorlagenmaske verwendet.

Bewertung:
0 = Der Schmelzkleberauftrag erfolgt direkt unter der Düse in gerader Linie mit einem maximalen Ablenkung von 0,5 cm.
1 = Die Schmelzkleberfäden erreichen das Substrat gar nicht, da sie zu stark ausgelenkt werden oder die Schmelzkleberfäden werden so stark ausgelenkt, dass sie das Substrat nicht in gerader Linie oder mit einer Ablenkung von mehr als 0,5 cm erreichen.

### Ablenkung von feinen Fäden von der Vorlagenmaske oder Bildung von Engelshaar:

Hierbei wird die Ablenkung der Sprühfäden in oder gegen die Richtung der Beschichtung beschrieben, wobei nur die Sprühbreite von 2,5 cm betrachtet wird. Wird der Auftrag von
2,5 cm überschritten oder fliegen feine Fäden über das Substrat und Erreichen dieses nicht, spricht man von Engelshaar.

Bewertung:
0 = keine abgelenkten Fäden
0,5 = Fäden bis zu 0,5 cm abgelenkt
1 = Fäden bis zu 1 cm abgelenkt
2 = Fäden bis zu 2 cm abgelenkt
3 = Fäden bis zu 3 cm abgelenkt
4 = Fäden über 3 cm abgelenkt

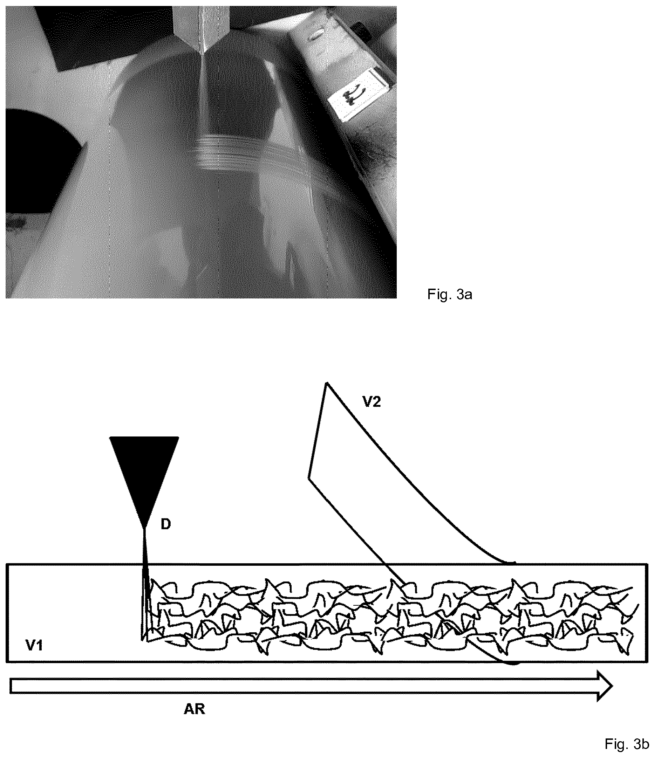

In Fig. 3 ist das Sprühen auf eine Walze abgebildet. Aus diesem Blickwinkel kann sehr gut die Ablenkung der Sprühfäden in bzw. gegen die Beschichtungsrichtung bestimmt werden.

### Note:

Die Note stellt die Gesamtzahl der Punkte dar. Je kleiner die Zahl ist desto besser ist die Sprühbarkeit.

### Sprühbarkeit:

Je weniger Gesamtpunkte bei der Auswertung erhalten werden desto besser ist die Sprühbarkeit des untersuchten Schmelzklebers. 0 Punkte bedeuten eine Sprühbarkeit von
100 %, 11 Punkte eine Sprühbarkeit von 0 %.

Tabellen 2a bis 2c zeigen beispielhaft die Auswertung der 14 Sprühversuche bei 140°C unter Verwendung der Schmelzkleberzusammensetzung gemäß Beispiel 3a. Tabelle 3 zeigt die Sprühbarkeit in % für alle getesteten Schmelzkleberzusammensetzungen.

**Tabelle 2a: Parameter und Ergebnisse der Bewertung für die Versuche 1 bis 5.**

| **Parameter** | **1** | **2** | **3** | **4** | **5** |
|---|---|---|---|---|---|
| Temperatur in °C | 140 | 140 | 140 | 140 | 140 |
| Drehzahl der Pumpe in % | 13 | 13 | 26 | 26 | 35 |
| Menge Schmelzkleber in g/min | 3,90 | 3,90 | 7,46 | 7,46 | 10,64 |
| Düsenabstand zum Substrat in cm | 4 | 4 | 4 | 4 | 4 |
| Luftdruck an der Düse in bar | 2 | 3 | 2 | 3 | 1 |

| **Auswertung des Sprühmusters** | | | | | |
|---|---|---|---|---|---|
| Visueller Eindruck des Sprühmusters | 1 | 1 | 0 | 0 | 0 |
| Kantenstabilität | 0 | 0 | 0 | 0 | 0 |
| Ablenkung der Fäden (von Vorlagenmaske) | 0 | 0 | 0 | 0 | 0 |
| Feine Fäden | 0 | 0 | 0 | 0 | 0 |

| **Auswertung des Videos** | | | | | |
|---|---|---|---|---|---|
| Auftrag direkt unter der Düse | 0 | 0 | 0 | 0 | 1 |
| Ablenkung von feinen Fäden von der Vorlagenmaske oder Bildung von Engelshaar | 0 | 0 | 0,5 | 0,5 | 0,5 |
| Note | 0 | 1 | 0,5 | 0,5 | 1,5 |
| Sprühbarkeit in % | 90,91 | 90,91 | 95,45 | 95,45 | 86,36 |

**Tabelle 2b: Parameter und Ergebnisse der Bewertung für die Versuche 6 bis 10.**

| **Parameter** | **6** | **7** | **8** | **9** | **10** |
|---|---|---|---|---|---|
| Temperatur in °C | 140 | 140 | 140 | 140 | 140 |
| Drehzahl der Pumpe in % | 35 | 35 | 35 | 35 | 35 |
| Menge Schmelzkleber in g/min | 10,64 | 10,64 | 10,64 | 10,64 | 10,64 |
| Düsenabstand zum Substrat in cm | 4 | 4 | 4 | 4 | 4 |
| Luftdruck an der Düse in bar | 2 | 2,5 | 3 | 3,5 | 4 |

| **Auswertung des Sprühmusters** | | | | | |
|---|---|---|---|---|---|
| Visueller Eindruck des Sprühmusters | 0 | 0 | 0 | 1 | 0 |
| Kantenstabilität | 0 | 0 | 0 | 0 | 0 |
| Ablenkung der Fäden (von Vorlagenmaske) | 0 | 0 | 0 | 0 | 0 |
| Feine Fäden | 0 | 0 | 0 | 0 | 0 |

| **Auswertung des Videos** | | | | | |
|---|---|---|---|---|---|
| Auftrag direct unter der Düse | 1 | 1 | 1 | 1 | 0 |
| Ablenkung von feinen Fäden von der Vorlagenmaske oder Bildung von Engelshaar | 0,5 | 0,5 | 0,5 | 1 | 1 |
| Note | **1,5** | **1,5** | 1,5 | 2,5 | 1,5 |
| Sprühbarkeit in % | 86,36 | 86,36 | 86,36 | 77,27 | 86,36 |

**Tabelle 2c: Parameter und Ergebnisse der Bewertung für die Versuche 11 bis 14.**

| **Parameter** | **11** | **12** | **13** | **14** | **SBK** |
|---|---|---|---|---|---|
| Temperatur in °C | 140 | 140 | 140 | 140 | |
| Drehzahl der Pumpe in % | **73** | **73** | **91** | **91** | |
| Menge Schmelzkleber in g/min | 22,91 | 22,91 | 28,27 | 28,27 | |
| Düsenabstand zum Substrat in cm | 4 | 4 | 4 | 4 | |
| Luftdruck an der Düse in bar | 2 | 3 | 2 | 3 | |

| **Auswertung des Sprühmusters** | | | | | |
|---|---|---|---|---|---|
| Visueller Eindruck des Sprühmusters | 0 | 0 | 0 | 0 | |
| Kantenstabilität | 0 | 0 | 0 | 0 | |
| Ablenkung der Fäden (von Vorlagenmaske) | 0 | 0 | 0 | 0 | |
| Feine Fäden | 0 | 0 | 0 | 0 | |

| **Auswertung des Videos** | | | | | |
|---|---|---|---|---|---|
| Auftrag direkt unter der Düse | 1 | 1 | 1 | 1 | |
| Ablenkung von feinen Fäden von der Vorlagenmaske oder Bildung von Engelshaar | 1 | 0,5 | 1 | 1 | |
| Note | 2 | 1,5 | 2 | 2 | **1,68** |
| Sprühbarkeit in % | 81,82 | 86,36 | 81,82 | 81,82 | **84,74** |

| | | | | | |
|---|---|---|---|---|---|
| SBK: Sprühbarkeit | | | | | |

**Tabelle 3 zeigt die Sprühbarkeit in % für alle getesteten Schmelzkleberzusammensetzungen.**

| Formulierung | Temperatur | Sprühbarkeit |
|---|---|---|
| 3a | 140°C | 84,7 % |
| 3a | 160°C | 82,8 % |
| 3b | 140°C | 87,3 % |
| 3b | 160°C | 77,9 % |
| 3c | 140°C | 81,5 % |
| 3c | 160°C | 88,6 % |

Wie der Tabelle 3 entnommen werden kann, konnte anhand der detaillierten Aufschlüsselung der einzelnen Bewertungskriterien die (Ver-)Sprühbarkeit eines Klebstoffes und/oder des Polymers beurteilt werden. Basierend auf dieser Methode konnte nachgewiesen werden, dass die (Ver-)Sprühbarkeit des degradierten Polymers sich deutlich verbessert hat und ein weitaus größeres Anwendungsfenster, z. B. in Bezug auf Luftdruckvariation, Temperatur und Auftragsmenge in g/min oder g/m², erzielt werden konnte.

## Patentansprüche

1. Amorphes Poly-Alpha-Olefin, **dadurch gekennzeichnet, dass** es eine Viskosität bei 190°C von kleiner 5.000 mPas, vorzugsweise von 1.000 bis 4.000 mPas, eine Molgewichtsverteilung (Mw/Mn) von 3 bis 8, einen Quotient aus Mz/Mw von kleiner-gleich 3,0, vorzugsweise 1,1 bis 2,9 und einen Quotient aus Mz/Mn kleiner 21,0, vorzugsweise 1,1 bis 19,9, jeweils bestimmt nach der in der Beschreibung angegebenen Methode, aufweist.

2. Amorphes Poly-Alpha-Olefin, **dadurch gekennzeichnet, dass** es von 0,01 bis 3 Gew.-% mindestens eines Antioxidants aufweist.

3. Amorphes Poly-Alpha-Olefin, **dadurch gekennzeichnet, dass** es von 0,01 bis 3 Gew.-% mindestens eines Abbauproduktes eines Radikalbildners aufweist.

4. Verfahren zur Herstellung eines degradierten amorphen Poly-Alpha-Olefins, **dadurch gekennzeichnet, dass** ein amorphes Poly-Alpha-Olefin, welches eine Viskosität bei 190°C von größer-gleich 5000 mPas, bevorzugt 6000 bis 100.000 mPas und besonders bevorzugt von 7500 bis 75000 mPas aufweist, einer radikalischen, vorzugsweise peroxidischen Degradierung unterzogen wird.

5. Verfahren nach Anspruch 4, **dadurch gekennzeichnet, dass** die radikalische Degradierung in einem Extruder durchgeführt wird.

6. Verfahren nach Anspruch 4 oder 5, **dadurch gekennzeichnet, dass** die radikalische Degradierung in Gegenwart eines Radikalbildners, vorzugsweise ausgewählt aus Dibenzoylperoxid, tert.-Butylperoxyisopropylcarbonat, 2,5-Dimethyl-2,5-di(tert-butylperoxy)hexan, Di-tert.-Butylperoxid oder p-Methanhydroperoxid durchgeführt wird.

7. Verfahren nach Anspruch 6, **dadurch gekennzeichnet, dass** der Anteil der eingesetzten Radikalbildner von 0,01 bis 10 Gew.-%, bevorzugt 0,1 bis 5 Gew.-% bezogen auf die Summe von APAO und Radikalbildnern beträgt.

8. Verfahren nach mindestens einem der Ansprüche 4 bis 7, **dadurch gekennzeichnet, dass** die Reaktion der Degradierung bei einer Temperatur von 100 bis 350°C, bevorzugt von 150 bis 250°C durchgeführt wird.

9. Verfahren nach mindestens einem der Ansprüche 4 bis 8, **dadurch gekennzeichnet, dass** die Reaktion der Degradierung über einen Zeitraum von 15 Sekunden bis 1200 Sekunden, bevorzugt 30 Sekunden bis 600 Sekunden durchgeführt wird.

10. Verfahren nach mindestens einem der Ansprüche 4 bis 9, **dadurch gekennzeichnet, dass** die Reaktion der Degradierung über einen Zeitraum t von 15 Sekunden bis 1200 Sekunden, bevorzugt 30 Sekunden bis 600 Minuten und bei einer Temperatur T von 100 bis 350°C, bevorzugt von 150 bis 250°C durch geführt, wobei der Anteil A der eingesetzten Radikalbildner von 0,01 bis 10 Gew.-%, bevorzugt 0,1 bis 5 Gew.-% bezogen auf die Summe von APAO und Radikalbildnern beträgt, mit der Maßgabe, dass das Produkt aus t x T x A von 500 bis 1.000.000 [sec °C Gew.-%], bevorzugt von 1000 bis 100.000 [sec °C Gew.-%] beträgt.

11. Verfahren nach mindestens einem der Ansprüche 4 bis 10, **dadurch gekennzeichnet, dass** die Reaktion in einem Mischaggregat, bevorzugt in einem Extruder durchgeführt wird.

12. Verfahren nach mindestens einem der Ansprüche 4 bis 11, **dadurch gekennzeichnet, dass** ein APAO gemäß einem der Ansprüche 1 bis 3 hergestellt wird.

13. Verwendung eines APAOs nach einem der Ansprüche 1 bis 3 oder hergestellt mit einem Verfahren gemäß einem der Ansprüche 4 bis 12 in Schmelzkleber-zusammensetzungen.

14. Verwendung nach Anspruch 13, **dadurch gekennzeichnet, dass** die Zusammensetzung mindestens 70 Gew.-%, bevorzugt mindestens 90 Gew.-% amorphe Poly-Alpha-Olefine gemäß einem der Ansprüche 1 bis 3 oder hergestellt mit einem Verfahren gemäß einem der Ansprüche 4 bis 12.

15. Verwendung nach Anspruch 13 oder 14, **dadurch gekennzeichnet, dass** die Schmelzkleberzusammensetzung durch Auftrag mittels Sprühdüse, Schlitzdüse, Schmelzklebepistole oder Schmelzguss, bevorzugt mittels Sprühdüse, besonders bevorzugt mittels Spiraldüsen appliziert wird.

16. Verwendung nach mindestens einem der Ansprüche 13 bis 15, **dadurch gekennzeichnet, dass** die Schmelzkleberzusammensetzung in den Anwendungen Verpacken, bevorzugt Kartonagen oder Papier, Bauen, insbesondere Holzrahmenbauweise, Teppich, Holzbearbeitung, bevorzugt Profilversiegelung und Kantenumleimung, Automobil, bevorzugt Dachhimmel, Luftfilter oder Fahrzeuglampen, Matratzen, Bitumen, Hygieneartikel, bevorzugt Windeln oder Binden, verwendet wird.
